# EUROPÄISCHE PATENTSCHRIFT

(11) **EP 3 123 581 B1**
(45) Veröffentlichungstag und Bekanntmachung des Hinweises auf die Patenterteilung: **01.05.2019**
(21) Anmeldenummer: 15712333.2
(22) Anmeldetag: 23.03.2015
(51) Int. Cl.: H02G 11/00, F16G 13/16

(54) **LEITUNGSFÜHRUNGSEINRICHTUNG MIT EINSTÜCKIGEM GELENK UND ENTSPRECHENDES KETTENGLIED**
LINE GUIDE DEVICE WITH A SINGLE-PIECE HINGE AND CORRESPONDING CHAIN LINK
DISPOSITIF DE GUIDAGE DE LIGNE AVEC ARTICULATION EN UNE SEULE PIÈCE ET MAILLON CORRESPONDANT

(30) Priorität: 24.03.2014 DE 202014101366 U
(43) Veröffentlichungstag der Anmeldung: 01.02.2017
(73) Patentinhaber: Igus GmbH, 51147 Köln (DE)
(72) Erfinder: BARTEN, Dominik, 53340 Meckenheim (DE)
(74) Vertreter: Lippert Stachow Patentanwälte Rechtsanwälte
(86) Internationale Anmeldenummer: PCT/EP2015/056123
(87) Internationale Veröffentlichungsnummer: WO 2015/144638

(56) Entgegenhaltungen:
- DE-A1- 19 860 948
- DE-A1- 19 860 948
- DE-A1-102008 020 907
- US-A1- 2003 145 575
- US-A1- 2003 145 575
- Patrick Fenner: "Lattice Hinge Design - Choosing Torsional Stress | Deferred Procrastination", , 16. November 2012 (2012-11-16), XP055194061, Gefunden im Internet: URL:http://www.deferredprocrastination.co. uk/blog/2012/lattice-hinge-design-choosing -torsional-stress/#more-2796 [gefunden am 2015-06-08]
- Anonymous: "Lattice Hinge Design - Choosing Torsional Stress | Deferred Procrastination", , 16 November 2012 (2012-11-16), XP055194061, Retrieved from the Internet: URL:http://www.deferredprocrastination.co. uk/blog/2012/lattice-hinge-design-choosing -torsional-stress/#more-2796 [retrieved on 2015-06-08]

## Beschreibung

Die Erfindung betrifft allgemein eine Leitungsführungseinrichtung zur Führung von Kabeln, Schläuchen oder dergleichen, umfassend eine Vielzahl von Gliedern bzw. Segmenten, welche vorzugsweise aus Kunststoff hergestellt sind und miteinander verbunden oder miteinander verbindbar sind. Die Erfindung betrifft insbesondere eine Leitungsführungseinrichtung nach dem Oberbegriff aus Anspruch 1, welche mindestens ein einstückiges Gelenk umfasst.

Die Erfindung betrifft ferner ein entsprechendes Kettenglied mit einem einstückigen Gelenk und ein Gelenkband mit mindestens einem solchen einstückigen Gelenk.

Leitungsführungseinrichtungen wie Energieführungsketten oder Kabelschleppe dienen dem geschützten Führen von Kabeln, Schläuchen oder dergleichen zur Übertragung von elektrischer Leistung, Signalen oder Medien zwischen einem ersten Anschlusspunkt und einem relativbeweglichen zweiten Anschlusspunkt. In aller Regel stellt die Leitungsführungseinrichtung hierbei in einem horizontal oder vertikal verfahrbaren Umlenkbereich einen vorgegebenen Krümmungsradius sicher, welcher die Leitungen vor Bruch oder Abknicken schützt.

Im Bereich solcher Leitungsführungseinrichtungen sind einstückig mit den zu verbindenden Teilen hergestellte Gelenke bereits bekannt, nämlich in Form von sogenannten Filmgelenken, Film- oder Folienscharnieren. So beschreibt beispielsweise die WO 2005/040659 A1 zwei Typen von einstückigen Gelenken. Zwischen zwei in Längsrichtung benachbarten Gliedern bzw. Segmenten werden einstückig mit den Segmenten hergestellte Filmgelenke bzw. Filmscharniere vorgesehen. Diese Filmscharniere sind einstückig mit jeweiligen Bodenelementen der einzelnen Segmente ausgebildet, verbinden diese gelenkig und dienen damit dem Verschwenken, d.h. dem Abwinkeln der Segmente gegeneinander um einen Umlenkbogen zu erzeugen.

Ebenfalls aus der WO 2005/040659 A1 sind einstückige Gelenke zum Aufschwenken eines Querstegs bzw. Deckelelements vorbekannt. Auch diese Gelenke sind gemäß WO 2005/040659 A1 in Form von Filmscharnieren ausgeführt, und damit aus einem Stück mit dem Quersteg und einer von zwei gegenüberliegenden Seitenwänden des jeweiligen Segments hergestellt.

Das Patent EP 1 094 585 B1 bzw. DE 600 07 260 T2 beschreibt ein einstückiges Kettenglied für eine Energieführungskette aus Kunststoff. Zum Auf- und Zuschwenken des Querstegs ist ein elastisch verformbarer Gelenkbereich vorgesehen, welcher eine Ausnehmung zur Reduzierung der Querschnittsfläche aufweist.

Die US 2003/0145575 A1 beschreibt ein Gelenk für den Quersteg mit zwei getrennten Gelenkbändern, welche den Quersteg in einer geöffneten Grundstellung halten sollen.

Eine weitere Lehre zur Herstellung von Leitungsführungseinrichtungen mit einstückigen Gelenkbereichen in Kettengliedern findet sich z.B. in WO 98/40645 A1.

DE 10 2008 020 907 A1 beschreibt eine Leitungsführungseinrichtung mit einstückigen Gelenken zwischen Kettengliedern.

Das Patent EP 1 138 555 B1 offenbart eine insgesamt einstückig hergestellte Leitungsführungseinrichtung mit Filmgelenken zwischen einzelnen, gegeneinander abwinkelbaren Abschnitten bzw. Segmenten der Leitungsführung.

Ein anderer Typ von Leitungsführungen sind Energieführungsketten aus einer Vielzahl von Kettengliedern, die beispielsweise durch Schwenkbolzen und entsprechende Aufnahmen gelenkig miteinander verbunden werden.

Die einstückige Herstellung von Gelenkbereichen zusammen mit sonstigen Bestandteilen der Leitungsführungseinrichtung ist fertigungstechnisch günstig. Es reduziert in der Regel auch spürbar den Montage- und Wartungsaufwand, wenn weniger Einzelteile vorliegen. Dies gilt beispielsweise für die einstückige Herstellung eines im Querschnitt U-förmigen Kettenglieds mit aufschwenkbarem Quersteg. Zwischen dem Quersteg und dem Seitenteil ist dann eine einstückige Gelenkverbindung erforderlich.

Nachteilig ist jedoch, dass für eine geeignete Verformbarkeit von Filmgelenken Kunststoffe mit vergleichsweise niedrigem Elastizitätsmodul (E-Modul) erforderlich sind. Insbesondere im Spritzgussverfahren können derzeit Teile mit Filmgelenken deshalb nur mit bzw. aus relativ elastischen Kunststoffen hergestellt werden. Neben den Anforderungen an die zu verwendenden Kunststoffe sind auch bestimmte Einschränkungen hinsichtlich der Werkzeuggestaltung zu beachten, insbesondere hinsichtlich des Fließverhaltens im Bereich der herzustellenden Filmgelenke.

Eine Aufgabe der vorliegenden Erfindung ist es mithin, eine Lösung für einstückig hergestellte Gelenke vorzuschlagen, welche größere Freiheiten bei der Fertigung, insbesondere bei der Materialwahl eröffnet.

Diese Aufgabe löst erfindungsgemäß eine Leitungsführungseinrichtung nach Anspruch 1 und ein Kettenglied nach Anspruch 11.

In einfachster Ausführung zeichnet sich die erfindungsgemäße Lösung dadurch aus, dass das einstückig mit den zu verbindenden Teilen hergestellte Gelenk gitterartig ausgeführt ist, und zwar mit einer Mehrzahl von im Gelenk vorgesehenen Materialaussparungen. Diese Materialaussparungen sind erfindungsgemäß gegeneinander in zwei quer zueinander stehenden Richtungen versetzt, d.h. sowohl in einer Richtung, insbesondere in der Verbindungsrichtung, als auch quer hierzu. Hierdurch bilden die Aussparungen im Gelenk mindestens einen quer zur Verbindungsrichtung liegenden Torsionsbereich. Der bzw. die Torsionsbereiche können sich insbesondere senkrecht zur Verbindungsrichtung erstrecken.

In den meisten Fällen wird es sich um ein reines Schwenkgelenk handeln, bei welchem die Verbindungsrichtung im geschwenkten Zustand einer Krümmung um eine gedachte Schwenkachse folgt, d.h. die Verbindungsrichtung liegt im ungekrümmten Zustand etwa senkrecht zur gedachten Schwenkachse. Die Verbindungsrichtung bezeichnet hierbei die Verlaufsrichtung des einstückigen Gelenks, welche typischerweise, jedoch nicht zwingend mit der kurzen Hauptachse der gitterartigen Anordnung zusammenfällt. Das Gelenk kann auch eine gewisse Toleranz in Verbindungsrichtung und gegen seitliches Auslenken bieten, was z.B. für schwenkbare Querstege vorteilhaft ist.

Eine einstückige Herstellung des Gelenks bedeutet im weitesten Sinne eine monolithische Herstellung aus einem Stück zusammen mit den zu verbindenden Teilen. Dies kann insbesondere durch Herstellung in einem gemeinsamen Guss, z.B. im Spritzgussverfahren, oder auch durch Anformen, Anspritzen oder anderweitig durch nachträgliche stoffschlüssige Verbindung erfolgen.

Die vorgeschlagene Anordnung von Aussparungen in dem das Gelenk bildenden Bereich macht steife, d.h. an sich nicht besonders flexible Werkstoffe, überhaupt erst verwendbar. Die gitterartige Formgebung erlaubt damit erst die monolithische Gelenkbauweise aus steifen Werkstoffen.

Das einstückige Gelenk ist ein nachgiebiger Mechanismus (engl. "compliant mechanism"). Es ähnelt in der Bauweise einem sogenannten Krümmungsgelenk (engl. "flexure hinge"), welches als Festkörpergelenk aus Silizium in der Mikrosystemtechnik (engl. MEMS) bekannt ist. Diese Lösung hat sich in Versuchen jedoch überraschenderweise auch für die Herstellung mit Gelenken aus verstärkten Kunststoffen als besonders geeignet erwiesen. Derartige Gelenke z.B. aus faserverstärktem Kunststoff, bieten überraschend gute Ergebnisse, insbesondere bei Dauerfestigkeit.

Die erfindungsgemäße Gestaltung erzeugt anhand der Aussparungen einen oder mehrere Torsionsbereiche, d.h. Bereiche welche bestimmungsgemäß auf Torsion beansprucht werden. So können in der Gelenkverbindung deutlich steifere Materialien und/oder größere Materialdicken (Stärken) eingesetzt werden. Im Gegensatz zu typischen Filmgelenken ist die überwiegende Grundbeanspruchung in den Bestandteilen des Gelenks nicht eine Biegung, sondern eine auf einen oder mehrere Torsionsbereiche verteilte Torsion. Material und Dimensionierung sind vorzugsweise so gewählt, dass die Torsionsbereiche bei jeder bestimmungsgemäßen Beanspruchung im drehelastischen Bereich bleiben. In Gesamtheit betrachtet ermöglicht die Summe mehrerer Torsionsverformungen eine Biegung des Gelenks mit einer Flexibilität ähnlich einem Filmgelenk.

Die Erfindung ermöglicht eine einstückige Herstellung, bei welcher das Gelenk im Wesentlichen homogen aus dem gleichen Werkstoff wie die zu verbindenden eigentlichen Formteile hergestellt ist, insbesondere eine einstückige Herstellung aus verhältnismäßig steifen Kunststoffen, d.h. Kunststoffen mit relativ hohem E-Modul. Dies wird u.a. dadurch ermöglicht, dass im Vergleich zu herkömmlichen Filmgelenken die Gelenkverbindung nicht durch eine lokal ausgeprägte Schwächung bzw. Verjüngung in der Materialstärke erzielt werden muss.

Das Gelenk und die Kettenglieder bzw. Segmente werden bevorzugt insgesamt aus einem Stück und aus Kunststoff hergestellt. Denkbar wäre aber auch eine Leitungsführung aus anderem Material, z.B. aus Metallblech.

In bevorzugter Ausführungsform sind die Gelenkverbindung und die zu verbindenden Teile aus faserverstärktem Kunststoff einstückig hergestellt. Dies ist inbesondere für die Herstellung einstückiger Kettenglieder vorteilhaft. So kann trotz des einstückig integrierten Gelenks, z.B. zum Aufschwenken des Querstegs, ein sehr steifes bzw. stabiles Kettenglied für hohe Belastungen, z.B. für eine Energieführungskette, die großen Zugkräften ausgesetzt ist oder eine große Kettenlänge erfordert. Ferner lassen sich stabile Kettenglieder auch für größere Kettenbreiten herstellen.

Mechanisch günstige Verhältnisse werden erzielt, wenn die Aussparungen ein regelmäßiges Gitter bilden, d.h. jeweils auf einer identischen Grundform beruhen. Die Grundform ist vorzugsweise länglich, insbesondere rechteckig, oval oder langlochartig und hat zweckmäßig eine Haupterstreckung quer zur Verbindungsrichtung des einstückigen Gelenks.

In bevorzugter Ausführungsform bilden die Aussparungen durchgehende Durchbrüche, d.h. gehen durch die gesamte Stärke des Materials zwischen den zu verbindenden Bereichen.

Die Aussparungen können auch nicht durchgehend bzw. nicht vollständig durchdringend, z.B. in der Art von länglichen Sacklöchern, ausgeführt sein. Dies kann z.B. vorteilhaft sein, um das Gelenk gegen unerwünschte Belastungen, z.B. gegen Zugbelastung oder seitliches Ausschwenken widerstandsfähiger zu gestalten. Nicht durchgehende Aussparungen sollten jedoch den überwiegenden Anteil (>50%) der Materialstärke aussparen. Diese Art von Aussparung lässt sich ebenfalls gut im Spritzgussverfahren herstellen.

Eine gute Flexibilität des Gelenks wird erreicht, indem mehrere, vorzugsweise mindestens drei parallele Aussparungsreihen in Verbindungsrichtung versetzt vorgesehen sind. Jede Aussparungsreihe weist hierbei jeweils mindestens eine Aussparung auf. Günstige Belastungsverteilung wird erreicht, wenn die Aussparungsreihen abwechselnd und regelmäßig zueinander versetzt ausgeführt sind. Besonders bevorzugt wird ein Versatz quer zur Verbindungsrichtung, welcher etwa der Hälfte der Haupterstreckung einer vollen Aussparung, d.h. einer der Grundform entsprechenden Aussparung, welche nicht seitlich offen ist, entspricht.

Ein zweckmäßiger Kompromiss zwischen Belastbarkeit des Gelenks und geeigneter Gelenkflexibilität bzw. Biegsamkeit wird auch bei besonders steifen Kunststoffen erzielt, wenn die summierte Haupterstreckung der Aussparungen in jeder Aussparungsreihe im Bereich von 65% bis 95% der Gesamtbreite des Gelenks auf Höhe der entsprechenden Aussparungsreihe beträgt. Besonders bevorzugt liegt die gesamte Querabmessung der Materialschwächung durch die einzelnen Aussparungen in Summe zwischen 80 und 90% der Gesamtbreite des Gelenks auf dieser Höhe.

In der gitterartigen Formgebung des einstückigen Gelenks liegen zwischen bzw. seitlich neben den Aussparungen jeweils ein oder mehrere Verbindungsstege, welche die Torsionsbereiche des Gelenks untereinander bzw. mit den zu verbindenden Teilen verbinden.

In bevorzugter Ausführung mit mehreren Aussparungsreihen liegen zwischen zwei Aussparungsreihen jeweils mindestens zwei Verbindungsstege.

Die Materialstärke der Verbindungsstege zwischen den Torsionsbereichen kann größer oder gleich der Breite der Verbindungsstege sein. So wird eine Biegung im Bereich der Verbindungsstege im Wesentlichen vermieden.

Die summierte Breite der Verbindungsstege zwischen den Aussparungsreihen ist vorzugsweise jeweils etwa konstant, wodurch eine gleichmäßige Torsionsbelastung der aneinandergereihten Torsionsbereiche erzielt werden kann. Analog zur vorgenannten gesamten Materialschwächung auf Höhe einer Aussparungsreihe beträgt die summierte Breite der Verbindungsstege auf dieser Höhe vorzugsweise etwa zwischen 5% und 40%, vorzugsweise im Bereich von 7,5% bis 20% der Gesamtbreite des Gelenks auf dieser Höhe. Eine Mindestbreite der Verbindungsstege gewährleistet eine gewisse Steifigkeit gegen ein Verdrehen des Gelenks um die Verbindungsrichtung.

Die Torsionsbereiche können grundsätzlich jegliche zur Torsionsbelastung geeignete Formgebung aufweisen. Bevorzugt werden die Torsionsbereiche jedoch jeweils in der Art eines Torsionsstabs gestaltet, insbesondere mit Vierkant- oder Polygonquerschnitt, wobei die Abmessung der Torsionsstäbe in Verbindungsrichtung vorzugsweise nicht größer ist als die Materialstärke der Torsionsstäbe. Auf diese Weise lassen sich insbesondere im Spritzgussverfahren auch mit steifen Kunststoffen dauerfeste Torsionsbereiche herstellen.

Die erfindungsgemäße Gestaltung des einstückigen Gelenks ermöglicht Ausführungsformen, bei welchen die Materialstärke des Gelenks, einschließlich der Torsionsbereiche und der Verbindungsstege durchgehend im Wesentlichen gleich groß ist. Die Materialstärke kann hierbei insbesondere im Wesentlichen gleich der Materialstärke im Anschlussbereich der zu verbindenden Teile sein. Hierdurch wird die typischerweise durch Filmgelenke bzw. Filmscharniere erzeugte Materialschwäche in Bezug auf die Wandstärke gänzlich vermieden. Es ist jedoch auch möglich, das Gelenk insgesamt im Vergleich zu den zu verbindenden Teilen dünnwandiger herzustellen und zugleich Torsion als Hauptbeanspruchung zu gewährleisten.

Die vorgenannten Merkmale bevorzugter Ausführungsformen sind ebenfalls auf ein Kettenglied gemäß Anspruch 11 oder eine einstückige Leitungsführungseinrichtung anwendbar.

Bei einem Kettenglied mit einem einstückigen Schwenkgelenk zum Aufschwenken eines Quersteges kann es durchaus wünschenswert sein, wenn das Gelenkelement um die Verbindungsachse nicht torsionsfest ist. Eine Energieführungskette mit um ihre Längsachse leicht tordierbaren Querstegen lässt sich leichter mit einem Spezialwerkzeug öffnen, welches man durch den Innenraum zieht. Demnach ist es für diesen Fall vorteilhaft, wenn das Gelenk mindestens drei parallele, in Verbindungsrichtung versetzte Aussparungsreihen mit jeweils mindestens einer Aussparung aufweist, aber die Verbindung der Torsionsbereiche zwischen zwei Aussparungsreihen nur ein Verbindungssteg aufweist, um kontrolliert eine Verdrehung bzw. Torsion im Verbindungssteg zu ermöglichen.

Ferner betrifft die Erfindung auch ein Gelenkband zum Verbinden von mindestens zwei Gliedern bzw. Segmenten einer Leitungsführungseinrichtung, welche sich durch mindestens ein erfindungsgemäßes, einstückiges Gelenk auszeichnet. Die vorstehenden bevorzugten Merkmale sind ebenfalls auf dieses Gelenkband anwendbar. Ein solches Gelenkband ist z.B. für eine Energieführungskette nach WO 00/41284 A1 geeignet, wobei Gelenkband und die einzelnen Glieder getrennt hergestellt sind. Auch bei einem einstückigen Gelenkband, insbesondere aus Kunststoff, kann es wünschenswert sein, steife Werkstoffe verwenden zu können, mit einem Elastizitätsmodul (E-Modul), das deutlich höher ist, als die gewünschte Flexibilität des Gelenkbands vorgibt. In der Regel ist es jedoch zur Steigerung der Lebensdauer bei solchen Gelenkbänder und auch bei einstückig hergestellten Leitungsführungen vorteilhaft, unverstärkte Kunststoffe in der Herstellung zu verwenden.

Weitere Einzelheiten, Vorteile und Merkmale der Erfindung lassen sich der nachfolgenden, rein beispielhaften Beschreibung bevorzugter Ausführungsbeispiele entnehmen. In den hierzu beigefügten Zeichnungen zeigen:
FIG.1A-D: ein einteilig hergestelltes Kettenglied für eine Energieführungskette mit einem erfindungsgemäßen Gelenk zum Aufschwenken des Querstegs, in geschlossenem Zustand (FIG.1A-1B) und in aufgeschwenktem, geöffnetem Zustand (FIG.1C-1D);
FIG.2: das Prinzipschema eines einstückigen Gelenks, insbesondere für das Kettenglied gemäß FIG.1A-1D;
FIG.3: das Prinzipschema eines weiteren Ausführungsbeispiels eines erfindungsgemäßen einstückigen Gelenks;
FIG.4: eine perspektivische, schematische Darstellung eines Abschnitts einer vollständig einstückig hergestellten Leitungsführung mit erfindungsgemäßen Gelenken zwischen einzelnen Segmenten der Leitungsführung;
FIG.5: ein flexibles Gelenkband, welches insbesondere zum Verbinden von Gliedern oder Segmenten einer Leitungsführung geeignet ist, in schematischer Draufsicht.

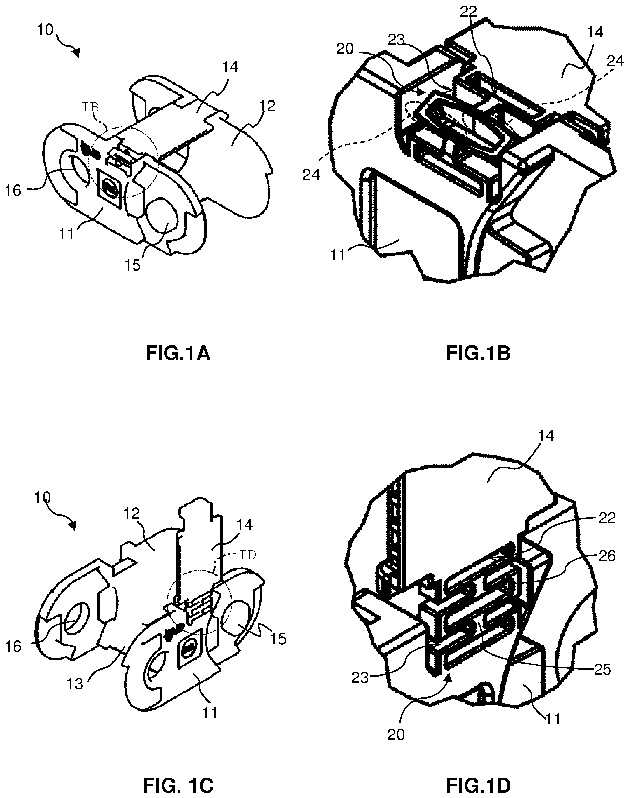

FIG.1A-1D zeigen ein Ausführungsbeispiel eines einzelnen Kettenglieds 10. Das Kettenglied 10 ist insgesamt als einstückiges Spritzgussteil, d.h. vollständig einstückig aus Kunststoff hergestellt, insbesondere durch ein Spritzgussverfahren. Das Kettenglied 10 besteht im Wesentlichen aus zwei Seitenteilen 11, 12, einem ersten Quersteg 13 und einem zweiten Quersteg 14. Der erste Quersteg 13 bildet in an sich bekannter Weise die starre Verbindung zwischen den parallel in Längsrichtung der Energieführungskette verlaufenden Seitenteilen. Der zweite Quersteg 14 ist an einem Ende am Seitenteil 11 schwenkbar gelagert und am anderen Ende mit dem gegenüberliegenden Seitenteil 12 verrastbar durch eine an sich bekannte, geeignete Rastverbindung. So kann der zweite Quersteg 14 von der in FIG.1A gezeigten geschlossenen Stellung in die in FIG.1C gezeigte geöffnete Stellung überführt werden, damit der Innenraum von außen zugänglich wird, z.B. zum Einlegen oder Ersetzen einer Leitung.

Mehrere Kettenglieder 10 werden anhand von Schwenkbolzen und passenden Aufnahmen 16 gelenkig miteinander verbunden, um eine Energieführungskette (hier nicht gezeigt) zu bilden. Hierbei haben die Seitenteile 11, 12 die Funktion der Seitenlaschen. Die Gestaltung des Kettenglieds ist hinsichtlich der Seitenteile 11, 12 und des ersten Querstegs 13 an sich bekannt, beispielsweise aus DE 4313075 A1 oder WO 00/63586 A1, und wird daher nicht im Einzelnen erläutert.

Die erfindungsgemäßen Kettenglieder 10 unterscheiden sich jedoch von solchen bekannten Kettengliedern durch die vollständig einteilige Herstellung, d.h. beide Seitenteile 11, 12, der eine Quersteg 13 und auch der andere Quersteg 14 sind aus einem Stück hergestellt.

Ferner liegt ein Unterschied und wesentlicher Vorteil in dem für die einstückige Herstellung verwendbaren Kunststoffmaterial. Aufgrund der nachfolgend im Einzelnen erläuterten Geometrie des Schwenkgelenks am zweiten Quersteg 14, kann ein besonders steifer, verstärkter Kunststoff verwendet werden, insbesondere ein faserverstärkter Kunststoff.

Erfindungsgemäß ist zum Aufschwenken des zweiten Querstegs 14 ein besonderes Schwenkgelenk 20 vorgesehen. Durch das Schwenkgelenk 20 ist der zweite Quersteg 14 einstückig mit dem Seitenteil 11 verbunden. Beide Seitenteile 11, 12, beide Querstege 13, 14 und das Schwenkgelenk 20 sind so insgesamt in einem Stück aus faserverstärktem Kunststoff hergestellt.

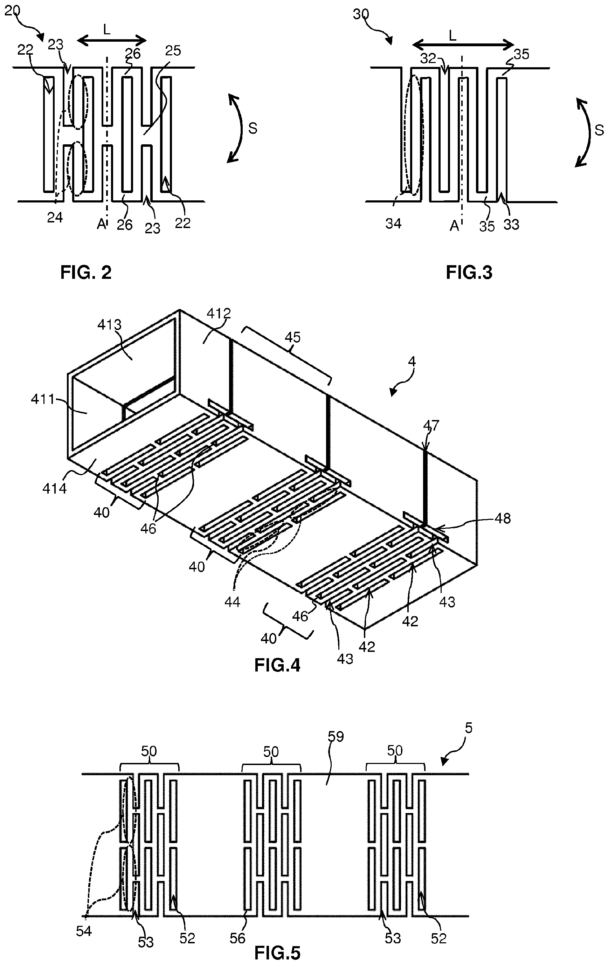

Die Geometrie und Funktionsweise des Schwenkgelenks 20 wird anhand der schematischen Prinzipdarstellung FIG.2 näher erläutert. FIG.2 zeigt das Schwenkgelenk 20 im unverformten, nicht gebogenen Zustand entsprechend FIG.1D. Das Schwenkgelenk 20 verläuft in Verbindungsrichtung L zwischen den zu verbindenden Teilen, beispielsweise dem Seitenteil 11 und dem zweiten Quersteg 14 gemäß FIG.1A-1D.

In der flachen Anordnung nach FIG.2 hat das einstückige Schwenkgelenk 20 insgesamt eine Struktur ähnlich einem Gitter oder einem Lattenwerk (engl. lattice). Dabei sind im Schwenkgelenk 20 eine Mehrzahl von Materialaussparungen 22, 23 (nachfolgend kurz Aussparungen) in einem regelmäßigen Muster vorgesehen. Die Aussparungen 22, 23 werden vorzugsweise bereits im Spritzgussvorgang durch Aussparung erzeugt, könnten aber auch durch nachträgliche Bearbeitung hergestellt werden.

Im gezeigten Beispiel nach FIG.2 haben die Aussparungen 22, 23 eine näherungsweise rechteckige Kontur, könnten aber auch langlochförmig, oval oder ähnlich ausgeführt sein. Vorzugsweise sind die Aussparungen 22, 23 länglich ausgeführt mit einer Haupterstreckung parallel zur gedachten Schwenkachse A (gestrichelt in FIG.2), die ein Vielfaches der Breite in Verbindungsrichtung V beträgt. Die Haupterstreckung der länglichen Aussparungen 22, 23 liegt vorzugsweise senkrecht zur Verbindungsrichtung L.

Wie aus FIG.2 weiter ersichtlich, sind die Aussparungen 22, 23 etwa parallel aufgereiht, d.h. in Aussparungsreihen vorgesehen. Reihen mit (mindestens) einer innenliegenden Aussparung 22 und zwei seitlich offenen Aussparungen 23 alternieren in Verbindungsrichtung L. Die Aussparungen 23 sind quer, vorzugsweise senkrecht zur Verbindungsrichtung L, zu den Aussparungen 22 versetzt, um im verbleibenden Material eine Gitterstruktur zu erzeugen.

So entsteht durch gitterartig versetzte Struktur der Aussparungen 22, 23 bzw. durch den Versatz in zwei quer zueinander stehenden Richtungen (vgl. L, A) eine gitterartige Struktur mit mehreren Torsionsbereichen im einstückigen Schwenkgelenk 20. Zwei solcher Torsionsbereiche 24 sind rein beispielhaft in FIG.2 und in FIG.1B gestrichelt markiert. Bei Schwenkbewegung, die insgesamt zu einer Krümmung bzw. Biegung des Schwenkgelenks 20 um die gedachte Schwenkachse A führt, werden alle Torsionsbereiche 24 für sich genommen hauptsächlich auf Torsion und nicht auf Biegung beansprucht. So kann auch mit steifem Material bzw. mit verhältnismäßig hohem E-Modul eine geeignete Flexibilität und gute Dauerfestigkeit des Schwenkgelenks 20 erzielt werden. Die Dimensionierung, insbesondere die geeignete Längserstreckung der Torsionsbereiche 24 in Richtung quer zur Verbindungsrichtung L wird materialabhängig eingestellt.

Die in Verbindungsrichtung L und hierzu senkrecht alternierend versetzten Aussparungen 22, 23 erzeugen Durchbrüche, welche verbleibende Torsionsbereiche 24 mit einer Gestalt ähnlich Torsionsstäben erzeugen. Im Beispiel nach FIG.2 beträgt der Versatz zwischen den Aussparungen 22, 23 in Richtung quer zur Verbindungsrichtung L etwa die Hälfte der Länge der Aussparungen 22, 23 senkrecht zur Verbindungsrichtung L. Durch den betragsmäßig gewählten Verband bzw. Versatz quer zur Verbindungsrichtung L kann die wirksam tordierbare Länge der Torsionsbereiche 24 und damit die Flexibilität ggf. eingestellt werden. Bei breiteren Gelenken (vgl. FIG.5) kann z.B. auch ein 1/3-Verband oder 1/4-Versatz anstelle des gezeigten 1/2-Verband gewählt werden.

Das Ausführungsbeispiel nach FIG.2 hat zwischen auf Höhe einer Reihe von Aussparungen 22, 23 abwechselnd genau einen Verbindungssteg 25 oder zwei Verbindungsstege 26. Durch einen einzelnen Verbindungssteg 25 zwischen benachbarten Torsionsbereichen 24 wird eine gewisse Verdrehbarkeit um die Längsrichtung L und insbesondere ein seitliches Auslenken, mit Doppelpfeil S veranschaulicht, d.h. um eine Achse senkrecht zur Figurenebene der FIG.2 zugelassen. Dieser weitere Freiheitsgrad ist bei Kettengliedern gemäß FIG.1A-1D vorteilhaft, um mit einer sogenannten Öffnungshilfe in einem Arbeitsschritt viele Querstege 14 aufschwenken zu können, ohne das Schwenkgelenk 20 zu beschädigen.

Vorzugsweise ist die summierte Breite von zwei Verbindungsstegen 26 etwa identisch zur Breite des einzelnen Verbindungsstegs 25 bzw. die Gesamtbreite der Verbindungsstege 25, 26 in Querrichtung ist etwa konstant über die Verbindungslänge L, um eine gleichmäßig verteilte Torsion der Torsionsbereiche 24 zu erzielen. Die Torsionsbereiche 24 in Form von Torsionsstäben andererseits haben vorzugsweise eine Abmessung in Verbindungsrichtung L, die höchstens unwesentlich größer ist als ihre Materialstärke (Dicke in der Ebene senkrecht zu FIG.2 gemessen), besonders bevorzugt eine Abmessung in Verbindungsrichtung L, die gleich oder kleiner ist als die Materialstärke. So können besonders gut tordierbare bzw. drehelastisch verformbare Torsionsbereiche 24 in Stabform bzw. Vierkantform erzeugt werden.

Wie aus FIG.1D am besten ersichtlich, ist die Materialstärke über die Abmessung des einstückigen Schwenkgelenks 20 vorzugsweise durchgehend konstant und kann beispielsweise identisch oder im Wesentlichen gleich groß wie die Materialstärke des aufschwenkbaren Querstegs 14 gewählt sein. Die verbleibende Breite der Verbindungsstege 25 bzw. 26, in Richtung senkrecht zur Verbindungsrichtung L betrachtet, ist für eine gute Biegsamkeit des Schwenkgelenks 20 vorzugsweise so gewählt, dass diese höchstens 20%, bei besonders biegesteifem Material höchstens 10%, der Gesamtbreite des Gelenks 20 darstellt (auf einer Höhe entlang der Verbindungsrichtung L betrachtet). Die Biegsamkeit und Dauerfestigkeit eines Gelenks 20 in Bauweise nach FIG.1A-1D bzw. FIG.2 stellte sich in Versuchen als überraschend gut dar, was unter Umständen auf das Verlaufverhalten im Spritzgussvorgang und die resultierende Faserorientierung zurückgeführt werden könnte.

FIG.3 zeigt ein weiteres erfindungsgemäßes Ausführungsbeispiel eines einstückigen Gelenks 30, welches ebenfalls in der Art eines Schwenkgelenks um die gedachte Schwenkachse A biegsam ist. Das Gelenk 30 kann auch in Anwendungen eingesetzt werden, in denen eine größere seitliche Biegung bzw. Auslenkung S {Achtung oben entsprechend Torsion korrigieren} (in der Ebene von FIG.3) oder auch eine gewisse Dehnung oder Stauchung in Verbindungsrichtung L wünschenswert ist.

In FIG. 3 ist der verformbare Bereich des einstückigen Gelenks 30 mit einer mäanderförmigen Gitterstruktur versehen. Hierbei wechseln sich zu einer Seite hin offene Aussparungen 32 mit zur anderen Seite hin offenen Aussparungen 33 ab. Dementsprechend ist zwischen den jeweiligen Torsionsbereichen 34 jeweils nur genau ein Verbindungssteg 35 vorgesehen. Dieses einstückige Gelenk 30 bietet im Vergleich zum Gelenk 20 nach FIG.2 größere Flexibilität in alle Richtungen. Es ist damit insgesamt weniger widerstandsfähig in Bezug auf unerwünschte Verformungen. Ähnlich wie beim Gelenk 20 nach FIG.2 wird auch beim Gelenk 30 nach FIG.3 durch Vorsehen von mindestens drei parallelen in Verbindungsrichtung L versetzten Reihen mit Aussparungen 22, 23 bzw. 32, 33 auch bei besonders steifem Material, wie z.B. FVK, eine hinreichend gute Biegsamkeit um die gedachte Schwenkachse A gewährleistet. Auch beim Gelenk 30 nach FIG.3 beträgt die Haupterstreckung der Aussparungen 32, 33 vorzugsweise im Bereich von 80% bis 90% der Gesamtbreite des Gelenks 30.

FIG.4 zeigt die Verwendung erfindungsgemäßer Schwenkgelenke 40 zur gelenkigen, abwinkelbaren Verbindung von einzelnen, benachbarten Segmenten 45, einer Leitungsführung 4. Die Leitungsführung 4 ist insgesamt abschnittsweise oder vollständig einstückig, wobei jedes Segment 45 kastenförmig aus parallelen Seitenteilen 411, 412 und diese verbindenden Querstegen 413, 414 besteht.

Die Leitungsführung 4 kann anhand der Schwenkgelenke 40 aus besonders steifem Kunststoff hergestellt werden. Die Schwenkgelenke 40 verbinden einstückig die Querstege 414 zweier benachbarter Segmente 45 im Bodenbereich (im Umlenkbogen innen). Die Schwenkgelenke 40 sind mittig zentriert auf Höhe von Trennspalten 47. Die vollumfänglich verlaufenden Trennspalten 47 bilden jeweils die Schnittstelle zwischen zwei benachbarten Segmenten 45. Die Gestaltung der einzelnen Schwenkgelenke 40 ist jeweils identisch. Sie entspricht dem Prinzip einer regelmäßigen Gitterstruktur mit länglichen Aussparungen 42, 43, welche in 1/2-Versatz alternieren, analog zu FIG.2. Die Schwenkgelenke 40 verbinden jeweils benachbarte Segmente 45 derart schwenkbar, dass die Segmente 45 um eine gedachte Schwenkachse (hier nicht näher gezeigt) gegeneinander abgewinkelt bzw. verschwenkt werden können, um einen verfahrbaren Umlenkbogen zu ermöglichen. Zwischen dem Schwenkgelenk 40 und dem Trennspalt 47 liegt zur besseren Schwenkbarkeit jeweils ein Querspalt 48.

In den Schwenkgelenken 40 aus FIG.4 sind die Torsionsbereiche 40 im Gegensatz zu FIG.2 jedoch stets durch mindestens zwei Verbindungsstege 46 verbunden. So kann ein seitliches Auslenken oder ein Tordieren um die Verbindungsrichtung bzw. Längsrichtung der Leitungsführung 4 vermieden werden.

Schwenkgelenke 40 nach dem Prinzip aus FIG.4 können damit zur Verbesserung einer einstückig hergestellten Leitungsführung z.B. nach WO 2005/040659 eingesetzt werden.

FIG.5 zeigt ein grundsätzlich von o.g. Beispielen unabhängig einsetzbares flexibles Gelenkband 5 zur gelenkigen Verbindung von Teilen. Ein solches Gelenkband 5, z.B. aus FVK oder aus Metallblech, kann insbesondere zur Verbesserung einer sogenannten Bandkette eingesetzt werden, bei welcher einzelne Kettenglieder durch das Gelenkband 5 miteinander zu einer flexiblen, biegsamen Energieführungskette verbunden werden. Zu diesem Zweck hat das Gelenkband einstückige Schwenkgelenke 50, welche z.B. nach dem Prinzip aus FIG.4 gestaltet sind. Zwischen den Schwenkgelenken 50 liegen volle Gelenkbandabschnitte 59 ohne Materialaussparungen. Alternativ liegt auch ein durchgehend mit dem regelmäßigen Muster der Aussparungen versehenes Gelenkband im Rahmen der Erfindung.

### Bezugzeichenliste

FIG.1A-1C
   10 Kettenglied
   11, 12 Seitenteile
   13 erster Quersteg
   14 zweiter Quersteg
   15 Schwenkbolzen
   16 Aufnahme
   20 Schwenkgelenk
   24 Torsionsbereich (Beispiel)
FIG.2
   20 Schwenkgelenk
   22, 23 Aussparungen
   24 Torsionsbereich (Beispiel)
   25 Verbindungssteg
   A Schwenkachse
   L Verbindungsrichtung
   S Auslenkung
FIG.3
   30 Schwenkgelenk
   32, 33 Aussparungen
   34 Torsionsbereich (Beispiel)
   35 Verbindungssteg
   A Schwenkachse
   L Verbindungsrichtung
   S Auslenkung
FIG.4
   4 Leitungsführung
   40 Schwenkgelenk
   411, 412 Seitenteile
   413, 414 Querstege
   42, 43 Aussparungen
   44 Torsionsbereich
   45 Segment
   46 Verbindungssteg
   47 Trennspalt
   48 Querspalt
FIG.5
   5 Gelenkband
   50 Schwenkgelenk
   52, 53 Aussparungen
   54 Torsionsbereich
   59 Gelenkbandabschnitt

## Patentansprüche

1. Leitungsführungseinrichtung zur Führung von Kabeln, Schläuchen oder dergleichen, umfassend eine Vielzahl Glieder bzw. Segmente, welche miteinander verbunden oder miteinander verbindbar sind und vorzugsweise aus Kunststoff hergestellt sind, sowie mindestens ein einstückiges Gelenk (20; 40),
**wobei** das einstückige Gelenk (20; 30; 40; 50) gitterartig ausgeführt ist mit einer Mehrzahl Aussparungen (22, 23; 32, 33; 42, 43), welche in zwei quer zueinander stehenden Richtungen versetzt sind, um mindestens einen quer zur Verbindungsrichtung (L) liegenden Torsionsbereich (24; 34) im Gelenk zu bilden.

2. Leitungsführungseinrichtung nach Anspruch 1, **dadurch gekennzeichnet, dass** das einstückige Gelenk (20; 40) aus verstärktem Kunststoff, vorzugsweise aus faserverstärktem Kunststoff, hergestellt ist.

3. Leitungsführungseinrichtung nach Anspruch 1 oder 2, **dadurch gekennzeichnet, dass** die Aussparungen (22, 23; 33, 33) durch eine identische Grundform ein regelmäßiges Gitter bilden, wobei die Grundform länglich ist, insbesondere rechteckig, oval oder langlochartig, mit einer Haupterstreckung quer zur Verbindungsrichtung (L) und/oder dass die Aussparungen (22, 23; 32, 33; 42, 43) durchgehende Durchbrüche bilden.

4. Leitungsführungseinrichtung nach einem der Ansprüche 1 bis 3, **dadurch gekennzeichnet, dass** das mindestens eine einstückige Gelenk (20; 40) zum schwenkbaren Verbinden -von zwei in Längsrichtung benachbarten Gliedern bzw. Segmenten (45) miteinander, welche durch das Gelenk (40) gegeneinander abwinkelbar bzw. verschwenkbar sind;
oder
- von zwei Teilen eines Glieds bzw. Segments, insbesondere eines Querstegs (14), welchen das Gelenk (20) aufschwenkbar mit einem Steitenteil (11) verbindet; vorgesehen ist.

5. Leitungsführungseinrichtung nach einem der Ansprüche 1 bis 4, **dadurch gekennzeichnet, dass** mindestens drei parallele, in Verbindungsrichtung versetzte Aussparungsreihen mit jeweils mindestens einer Aussparung (22, 23; 32, 33; 42, 43) vorgesehen sind, wobei vorzugsweise die Aussparungsreihen abwechselnd und regelmäßig zueinander versetzt sind, vorzugsweise mit einem Versatz quer zur Verbindungsrichtung von etwa der Hälfte der Haupterstreckung einer vollen Aussparung (22, 23; 32, 33; 42, 43).

6. Leitungsführungseinrichtung nach Anspruch 5, **dadurch gekennzeichnet, dass** zwischen zwei Aussparungsreihen jeweils mindestens zwei Verbindungsstege (26; 46) liegen, welche Torsionsbereiche untereinander bzw. mit den zu verbindenden Teilen verbinden.

7. Leitungsführungseinrichtung nach Anspruch 6, **dadurch gekennzeichnet, dass** die Materialstärke der Verbindungsstege (25, 26; 35; 46) grösser oder gleich der Breite der Verbindungsstege ist.

8. Leitungsführungseinrichtung nach Anspruch 6 oder 7, **dadurch gekennzeichnet, dass** die summierte Breite der Verbindungsstege (25, 26; 35; 46) zwischen den Aussparungsreihen jeweils etwa konstant ist.

9. Leitungsführungseinrichtung nach einem der vorstehenden Ansprüche, **dadurch gekennzeichnet, dass** der bzw. die Torsionsbereiche (24) jeweils in der Art eines Torsionsstabs gestaltet sind, vorzugsweise mit einer Abmessung in Verbindungsrichtung (L) nicht grösser als die Materialstärke.

10. Leitungsführungseinrichtung nach einem der vorstehenden Ansprüche, **dadurch gekennzeichnet, dass** die Stärke des Gelenks (20; 30; 40; 50) im Wesentlichen konstant ist, insbesondere im Wesentlichen gleich der Materialstärke im Anschlussbereich zumindest eines der zu verbindenden Teile (14; 414; 59).

11. Kettenglied (10) für eine Energieführungskette zur Führung von Kabeln, Schläuchen oder dergleichen, aus einer Vielzahl miteinander verbundener oder miteinander verbindbarer Kettenglieder, wobei das Kettenglied aus Kunststoff hergestellt ist und zwei Seitenteile (11, 12), einen diese fest verbindenden ersten Quersteg (13), sowie einen zweiten Quersteg (14) aufweist, welcher durch ein einstückiges Gelenk (20) aufschwenkbar mit einem der Seitenteile verbunden ist;
**wobei** das einstückige Gelenk (20) gitterartig ausgeführt ist mit einer Mehrzahl von im Gelenk vorgesehenen Aussparungen (22, 23), welche in zwei quer zueinander stehenden Richtungen versetzt sind, um mindestens einen quer zur Verbindungsrichtung (L) liegenden Torsionsbereich im Gelenk zu bilden.

12. Kettenglied nach Anspruch 11, **dadurch gekennzeichnet, dass** mindestens ein einstückiges Gelenk (20; 40) aus faserverstärktem Kunststoff hergestellt ist, insbesondere einstückig mit dem Glied (10) bzw. Segment (45).

13. Kettenglied nach Anspruch 11 oder 12, **dadurch gekennzeichnet, dass** mindestens drei parallele, in Verbindungsrichtung versetzte Aussparungsreihen mit jeweils mindestens einer Aussparung (22, 23) vorgesehen sind und auf Höhe einer Aussparungsreihe nur ein Verbindungssteg (25) liegt, welcher die Torsionsbereiche (24) verbindet.

14. Leitungsführungseinrichtung (4) nach Anspruch 1 zur Führung von Kabeln, Schläuchen oder dergleichen, umfassend eine Vielzahl einstückig aus Kunststoff hergestellter Segmente (45), wobei jeweils zwei Segmente miteinander durch ein einstückig mit den Segmenten hergestelltes Gelenk (40) verbunden und gegeneinander abwinkelbar sind,
**dadurch gekennzeichnet, dass** das einstückige Gelenk (40) gitterartig ausgeführt ist mit einer Mehrzahl von im Gelenk vorgesehenen Aussparungen (42, 43), welche in zwei quer zueinander stehenden Richtungen versetzt sind, um mindestens einen quer zur Verbindungsrichtung (L) liegenden Torsionsbereich (44) im Gelenk zu bilden.

15. Leitungsführungseinrichtung nach Anspruch 1 zur Führung von Kabeln, Schläuchen oder dergleichen, wobei mindestens zwei der Glieder bzw. Segmente miteinander durch ein Gelenkband (5) verbunden sind, wobei das Gelenkband und die einzelnen Glieder bzw. Segmente getrennt hergestellt sind,
**dadurch gekennzeichnet, dass** das Gelenkband (5) mindestens ein einstückiges Gelenk (50) aufweist, welches gitterartig ausgeführt ist mit einer Mehrzahl von im Gelenk vorgesehenen Aussparungen (52, 53), welche in zwei quer zueinander stehenden Richtungen versetzt sind, um mindestens einen quer zur Verbindungsrichtung (L) liegenden Torsionsbereich (54) im Gelenk zu bilden.

## Claims

1. A line guide device for guiding cables, hoses or the like, including a plurality of links or segments, which are or can be connected together and are preferably made from plastic, and at least one one-piece hinge (20; 40),
wherein the one-piece hinge (20; 30; 40; 50) is of a lattice-like structure with a plurality of cavities (22, 23; 32, 33; 42, 43), which are displaced in two directions that are transverse relative to each other, in order to form at least one torsional region (24; 34) in the hinge, the torsional region (24; 34) being disposed transversely relative to the connecting direction (L).

2. A line guide device according to claim 1 **characterised in that** the at least one one-piece hinge (20; 40) is made from reinforced plastic, preferably from fibre-reinforced plastic.

3. A line guide device according to claim 1 or claim 2 **characterised in that** the cavities (22, 23; 32, 33) by virtue of an identical basic shape form a regular lattice, wherein the basic shape is elongate, in particular rectangular, oval or slot-like, with a main extent transversely relative to the connecting direction (L) and/or **in that** the cavities (22, 23; 32, 33; 42, 43) form through holes.

4. A line guide device according to one of claims 1 to 3 **characterised in that** the at least one one-piece hinge (20; 40) is provided for pivotably connecting
- two links or segments (45) together, which are adjacent in the longitudinal direction and which are pivotable or can be angled relative to each other by the hinge (40); and/or
- two parts of a link or segment, in particular a transverse web (14) which is connected to a side portion (11) by the hinge (20) in such a way that it can be pivoted open.

5. A line guide device according to one of claims 1 to 4 **characterised in that** there are provided at least three parallel rows of cavities which are displaced in the connecting direction and each having at least one cavity (22, 23; 32, 33; 42, 43), wherein preferably the cavities are displaced alternately and regularly relative to each other, preferably with a displacement transversely relative to the connecting direction of approximately half the main extent of a full cavity (22, 23; 32, 33; 42, 43).

6. A line guide device according to claim 5 **characterised in that** disposed between two rows of cavities respectively are at least two connecting members (26; 46) which connect torsional regions to each other or to the parts to be connected.

7. A line guide device according to claim 6 **characterised in that** the material thickness of the connecting members (25, 26; 35; 46) is greater than or equal to the width of the connecting members.

8. A line guide device according to claim 6 or claim 7 **characterised in that** the totalled width of the connecting members (25, 26; 35; 46) between the rows of cavities is respectively approximately constant.

9. A line guide device according to one of the preceding claims **characterised in that** the torsional region or regions (24) is or are each in the manner of a torsion bar, preferably of a dimension in the connecting region (L) not greater than the material thickness.

10. A line guide device according to one of the preceding claims **characterised in that** the thickness of the hinge (20; 30; 40; 50) is substantially constant, in particular substantially equal to the material thickness in the connecting region of at least one of the parts (14; 414; 59) to be connected.

11. A chain link (10) for an energy guide chain for guiding cables, hoses or the like, comprising a plurality of chain links which are or can be connected together, wherein the chain link is made from plastic and has two side portions (11, 12), a first transverse web (13) fixedly connecting same, and a second transverse web (14) which is connected to one of the side portions by a one-piece hinge (20) in such a way that it can be pivoted open,
wherein the one-piece hinge (20) is of a lattice-like structure with a plurality of cavities (22, 23), which are provided in the hinge and which are displaced in two directions that are transverse relative to each other, in order to form at least one torsional region in the hinge, the torsional region being disposed transversely relative to the connecting direction (L).

12. A chain link according to claim 11 **characterised in that** the at least one one-piece hinge (20; 40) is made from fibre-reinforced plastic, in particular in one piece with the link (10) or segment (45).

13. A chain link according to claim 11 or claim 12 **characterised in that** there are provided at least three parallel rows of cavities that are displaced in the connecting direction, each having at least one respective cavity (22, 23), and only one connecting member (25) which connects the torsional regions (24) is disposed at the location of a row of cavities.

14. A line guide device (4) according to claim 1 for guiding cables, hoses or the like, including a plurality of segments (45) made in one piece from plastic material, wherein two respective segments are connected together by a hinge (40) which is made in one piece with the segments, and said segments can be angled relative to each other,
**characterised in that** the one-piece hinge (40) is of a lattice-like structure having a plurality of cavities (42, 43), which are provided in the hinge and which are displaced in two directions that are transverse relative to each other, in order to form at least one torsional region (44), which is disposed transversely relative to the connecting direction (L), in the hinge.

15. A line guide device according to claim 1 for guiding cables, hoses or the like, at least two of the links or segments being connected to one another by a hinge band (5), the individual links or individual segments being produced separately from the hinge band,
**characterised in that** the hinge band (5) has at least one one-piece hinge (50) which is of a lattice-like structure having a plurality of cavities (52, 53), which are provided in the hinge and which are displaced in two directions that are transverse relative to each other, to form at least one torsional region (54), which is disposed transversely relative to the connecting direction (L), in the hinge.

## Revendications

1. Dispositif de guidage de ligne pour guider des câbles, des tuyaux ou similaires, comprenant plusieurs maillons ou segments, qui sont ou peuvent être reliés entre eux et sont de préférence en matière plastique, et au moins une articulation (20; 40) en une seule pièce,
l'articulation en une seule pièce (20; 30; 40; 50) étant d'une structure en treillis avec une pluralité de cavités (22, 23; 32, 33; 42, 43), qui sont en quinconce dans deux directions transversales l'une par rapport à l'autre, afin de former au moins une zone de torsion (24; 34) dans l'articulation, la zone de torsion (24; 34) étant disposée transversalement à la direction de liaison (L).

2. Dispositif de guidage de ligne selon la revendication 1, **caractérisé en ce que** l'au moins une articulation en une seule pièce (20; 40) est en matière plastique renforcée, de préférence en matière plastique renforcée par des fibres.

3. Dispositif de guidage de ligne selon la revendication 1 ou la revendication 2, **caractérisé en ce que** les cavités (22, 23; 32, 33) forment, grâce à une forme de base identique, un treillis régulier, la forme de base étant allongée, en particulier rectangulaire, ovale ou en forme de fente, avec une étendue principale transversale à la direction de liaison (L) et/ou que les cavités (22, 23; 32, 33; 42, 43) forment des trous débouchants.

4. Dispositif de guidage de ligne selon l'une des revendications 1 à 3, **caractérisé en ce que** l'au moins une articulation en une seule pièce (20; 40) est prévue pour relier de manière pivotante
- deux maillons ou segments (45) qui sont adjacents dans la direction longitudinale et qui peuvent pivoter ou être inclinés l'un par rapport à l'autre par l'articulation (40); et/ou
- deux parties d'un maillon ou d'un segment, en particulier une âme transversale (14) qui est reliée à une partie latérale (11) par l'articulation (20) de telle sorte qu'elle puisse pivoter et être ouverte.

5. Dispositif de guidage de ligne selon l'une des revendications 1 à 4, **caractérisé en ce qu'**il est prévu au moins trois rangées parallèles de cavités qui sont déplacées dans la direction de liaison et qui présentent chacune au moins une cavité (22, 23; 32, 33; 42, 43), de préférence les cavités étant en quinconce alternativement et régulièrement les unes par rapport aux autres, avec un déplacement transversal à la direction de liaison, de préférence de moitié environ, de l'extension principale de la cavité entière (22, 23; 32, 33; 42, 43).

6. Dispositif de guidage de ligne selon la revendication 5, **caractérisé en ce qu'**entre deux rangées de cavités sont disposés au moins deux éléments de liaison (26; 46) qui relient entre eux ou avec les pièces à relier des zones de torsion.

7. Dispositif de guidage de ligne selon la revendication 6, **caractérisé en ce que** l'épaisseur du matériau des éléments de liaison (25, 26; 35; 46) est supérieure ou égale à la largeur des éléments de liaison.

8. Dispositif de guidage de ligne selon la revendication 6 ou 7, **caractérisé en ce que** la largeur totale des éléments de liaison (25, 26; 35; 46) entre les rangées de cavités est respectivement approximativement constante.

9. Dispositif de guidage de ligne selon l'une des revendications précédentes, **caractérisé en ce que** la ou les zones de torsion (24) sont chacune à la manière d'une barre de torsion, de préférence d'une dimension dans la zone de liaison (L) non supérieure à l'épaisseur du matériau.

10. Dispositif de guidage de ligne selon l'une des revendications précédentes, **caractérisé en ce que** l'épaisseur de l'articulation (20; 30; 40; 50) est sensiblement constante, en particulier sensiblement égale à l'épaisseur du matériau dans la zone de liaison d'au moins une des pièces (14; 414; 59) à relier.

11. Maillon de chaîne (10) pour une chaîne de guidage d'énergie destinée à guider des câbles, des tuyaux ou similaires, comprenant une pluralité de maillons de chaîne qui sont ou peuvent être reliés ensemble, dans lequel le maillon de chaîne est en matière plastique et présente deux parties latérales (11, 12), une première âme transversale (13) reliant de manière fixe celle-ci, et une seconde âme transversale (14) qui est reliée à une des parties latérales par une articulation (20) en une seule pièce, de façon à pouvoir être ouverte en pivotement,
l'articulation en une seule pièce (20) étant d'une structure en treillis avec une pluralité de cavités (22, 23) qui sont prévues dans l'articulation et qui sont en quinconce dans deux directions transversales l'une par rapport à l'autre, afin de former au moins une zone de torsion dans l'articulation, la zone de torsion étant disposée transversalement à la direction de liaison (L).

12. Maillon de chaîne selon la revendication 11, **caractérisé en ce que** l'articulation (20; 40) en une seule pièce est en matière plastique renforcée par des fibres, en particulier en une seule pièce avec le maillon (10) ou le segment (45).

13. Maillon de chaîne selon la revendication 11 ou 12, **caractérisé en ce qu'**il est prévu au moins trois rangées parallèles de cavités qui sont déplacées dans la direction de liaison, chacune ayant au moins une cavité respective (22, 23), et un seul élément de liaison (25) qui relie les zones de torsion (24) est disposé à l'emplacement d'une rangée de cavités.

14. Dispositif de guidage de ligne (4) selon la revendication 1 pour le guidage de câbles, tuyaux ou similaires, comprenant plusieurs segments (45) réalisés d'une seule pièce en matière plastique, dans lequel deux segments respectifs sont reliés ensemble par une articulation (40) réalisée en une seule pièce avec les segments, et lesdits segments peuvent être orientés l'un par rapport à l'autre,
**caractérisé en ce que** l'articulation en une seule pièce (40) est d'une structure en treillis ayant une pluralité de cavités (42, 43) qui sont prévues dans l'articulation et qui sont en quinconce dans deux directions transversales l'une par rapport à l'autre, afin de former au moins une zone de torsion (44) qui est disposée transversalement à la direction de liaison (L), dans l'articulation.

15. Dispositif de guidage de ligne selon la revendication 1 pour le guidage de câbles, tuyaux ou similaires, au moins deux des maillons ou segments étant reliés entre eux par une bande d'articulation (5), les maillons ou segments individuels étant fabriqués séparément de la bande d'articulation,
**caractérisé en ce que** la bande d'articulation (5) présente au moins une articulation (50) en une seule pièce qui est d'une structure en treillis ayant une pluralité de cavités (52, 53) qui sont prévues dans l'articulation et qui sont en quinconce dans deux directions transversales l'une par rapport à l'autre, afin de former au moins une zone de torsion (54) qui est disposée transversalement par rapport à la direction de liaison (L), dans l'articulation.
